Europäisches Patentamt

European Patent Office

Office européen des brevets

(19)

(11) Numéro de publication : **0 454 526 A1**

(12) ## DEMANDE DE BREVET EUROPEEN

(21) Numéro de dépôt : **91400949.3**

(22) Date de dépôt : **09.04.91**

(51) Int. Cl.$^5$ : **G06F 15/16, G06F 13/38**

(30) Priorité : **27.04.90 FR 9005377**

(43) Date de publication de la demande :
**30.10.91 Bulletin 91/44**

(84) Etats contractants désignés :
**AT BE CH DE DK ES FR GB GR IT LI LU NL SE**

(71) Demandeur : **Gernelle, Francois**
**9, Square de Mondovie**
**F-78150 Le Chesnay (FR)**

(72) Inventeur : **Gernelle, Francois**
**9, Square de Mondovie**
**F-78150 Le Chesnay (FR)**

(74) Mandataire : **Doireau, Marc et al**
**Cabinet Orès 6, avenue de Messine**
**F-75008 Paris (FR)**

(54) **Machine multiprocesseur symétrique à niveau de lien serré.**

(57)    La machine comprend plusieurs processeurs (P1,P2,P3), des organes périphériques (1-5) et des moyens de liaison (B1,B2) qui relient les processeurs aux organes périphériques pour le transfert de données lors des opérations d'entrée-sortie classiques. Chaque processeur (P1,P2,P3) est relié à chacun des autres processeurs au moyen d'un canal (b) dédié uniquement à la fonction communication inter-processeurs.
    Une telle machine permet un haut débit transactionnel et est tolérante aux pannes.

# FIG_1

EP 0 454 526 A1

La présente invention concerne une machine multiprocesseur symétrique à niveau de lien serré, du type comprenant au moins deux processeurs, des organes périphériques et des moyens de liaison qui relient les processeurs aux organes périphériques pour le transfert de données lors des opérations d'entrée-sortie classiques.

D'une manière générale, l'augmentation de la puissance et la convivialité ou facilité d'utilisation des ordinateurs ont fait naître depuis plusieurs années une informatique transactionnelle qui doit être capable de donner des réponses immédiates aux utilisateurs en mode interactif par l'intermédiaire de terminaux de plus en plus faciles à utiliser, notamment grâce à l'explosion de la micro-informatique personnelle.

Cette facilité d'utilisation a suscité la création de nouvelles applications où le traitement en temps réel, c'est-à-dire la mise à jour immédiate de données, s'implique toujours plus profondément dans le schéma directeur des petites, moyennes et grandes entreprises. D'ailleurs on a pu constater que les structures de l'entreprise se sont progressivement modifiées pour devenir très dépendantes du fonctionnement temps réel des systèmes informatiques.

Une telle évolution bien perçue par les utilisateurs a obligé les concepteurs de systèmes informatiques à prendre en compte les exigences des utilisateurs pour satisfaire leurs besoins réels, notamment pour ce qui concerne toutes les applications où le traitement des informations ne supporte pas ou difficilement la moindre interruption, c'est-à-dire qu'il requiert une continuité de service à 100%. Une telle exigence se retrouve quasiment partout quel que soit le domaine d'activité de l'entreprise (production, transactions financières et bancaires, communications,...).

Cette informatique transactionnelle pour répondre à ce type d'exigence a donné naissance à un nouveau type de matériel informatique dit à tolérance de panne qui soit en mesure d'assurer au mieux la continuité du traitement d'une tâche dans des domaines d'activité où la moindre interruption de tout ou partie du système informatique peut avoir de graves conséquences pouvant êre néfastes à la bonne marche de l'entreprise et à son image de marque.

Concrètement, cette notion de continuité du traitement correspond à la notion de résilience du système informatique chargé de ce traitement, c'est-à-dire son aptitude à continuer à fonctionner en dépit de défauts ou défaillances d'un ou plusieurs de ses éléments constitutifs. Cette aptitude se traduit notamment par la possibilité pour le système informatique de se reconfigurer afin de pallier ces défauts ou défaillances qui ne doivent pas être perçus par l'utilisateur. Une telle reconfiguration consiste par exemple dans le cas d'une machine multiprocesseur à tranférer la réalisation d'une ou plusieurs tâches nécessaires à l'exécution d'un programme d'un processeur tombé en panne à un autre processeur.

Ces systèmes informatiques doivent donc être capables d'avoir une puissance transactionnelle importante, de l'ordre d'une centaine de transactions par seconde par exemple, et de fonctionner avec une sécurité maximum.

A ce jour, le matériel informatique dit à tolérance de panne est constitué par des machines dont la conception technique les apparente à de grosses machines, qui sont essentiellement basées sur une redondance matérielle systématique rendant leur coût prohibitif et leur utilisation réservée à une clientèle limitée.

Cette redondance matérielle conduit en effet le plus souvent à des systèmes informatiques multiprocesseurs où une moitié des moyens matériels travaille, alors que l'autre moitié sommeille en attendant une panne éventuelle.

Il est à noter également que les moyens de communication entre les processeurs et les organes périphériques (disques, consoles, pupitres,...) sont constitués par des bus, en particulier un bus central commun à tous les processeurs et qui assure à la fois le transfert de messages entre les processeurs, notamment au cours de l'exécution d'une tâche, et le transfert de données proprement dites. Il en résulte des problèmes de contention habituels avec ce type de bus, qui sont aggravés du fait qu'ils sont plus adaptés à des transferts de données par DMA (blocs fixes) qu'à des échanges de messages courts, de longueur variable, généralement non connus à l'avance et du type requêtes de tâches qui sont spécifiques d'un dialogue inter-processeurs.

Tous ces problèmes liés notamment aux bus, font que la reconfiguration du système ne peut pas s'effectuer dans les meilleures conditions. En effet, une reconfiguration impose le transfert par le bus de messages qui doivent être pris aussitôt en compte par l'un des autres processeurs pour assurer la continuité du traitement. Il en résulte que cette continuité du traitement ne vas pas au-delà de 98 à 99%, ce qui laisse un degré d'incertitude difficilement acceptable compte-tenu du coût du système informatique.

En outre, l'expérience montre que les pannes ou défaillances qui peuvent intervenir au cours de l'exécution d'une tâche concernant essentiellement le logiciel et non le matériel dans 90% des cas, ce qui montre que le fait de doubler le matériel n'est pas une solution exhaustive.

Aussi, partant de la constatation que le marché de l'infomatique pour le développement de machines dites à tolérance de panne est en forte croissance, et que la barrière des coûts des machines actuellement proposées retient encore d'innombrables clients potentiels, le but de l'invention est de concevoir une machine multiprocesseur à haut débit transactionnel où les processeurs peuvent exécuter des tâches distinctes mais, lorsque le traitement l'exige, plusieurs processeurs sont mobilisés afin de poursuivre l'exécution d'une tache en cours de traitement lors d'une panne au niveau de l'un des processeurs afin d'assurer la continuité du traitement avec une sécurité maximale, ce but étant atteint grâce à une architecture système nouvelle et originale qui pallie les inconvénients précités, notamment au niveau des défaillances du logiciel, tout en procurant de nombreux avantages.

A cet effet, l'invention propose une machine multiprocesseur du type précité, caractérisée en ce que chaque processeur est directement relié à chacun des autres processeurs au moyen d'un canal dédié uniquement à la fonction communication interprocesseurs.

Selon une autre caractéristique de l'invention, chaque canal est constitué par un canal de type "FIFO" ou "premier entré - premier sorti", qui comprend à chaque extrémité au moins un tampon de mémorisation permettant au canal de travailler de manière asynchrone avec transmission des données en série ou en parallèle.

Selon encore une autre caractéristique de l'invention, la machine fonctionne sous un noyau temps réel qui, grâce à cette architecture, peut reconfigurer l'ensemble des ressources défectueuses, de manière à poursuivre le traitement sans interruption pour l'utilisateur rendant la machine tolérante aux incidents de fonctionnement et notamment aux pannes.

Selon un avantage de l'invention, le coût d'une telle machine peut être réduite d'un facteur 10 par rapport aux machines actuelles, ce qui permet de toucher un plus grand nombre d'utilisateurs.

Selon un autre avantage de l'invention, une telle machine est compatible avec la micro et la mini-informatique, et elle peut notamment fonctionner avec le système commercialisé par la Société ATT sous la marque "UNIX" conçu pour la réalisation de programmes d'application et qui est un système de type ouvert, c'est-à-dire acceptant tous les programmes d'application compatibles avec ledit système sans qu'il soit besoin de les adapter à la machine d'une part, ni à sa fonctionnalité tolérance de panne d'autre part.

Selon encore un autre avantage de l'invention, la machine peut inclure n processeurs (avec n pouvant être très supérieur à 10), ce qui implique n(n-1)/2 canaux inter-processeurs, alors que les machines actuelles ne peuvent aller au-delà de quelques processeurs à cause des problèmes de transmission au niveau des bus. Il en résulte donc une machine plus puissante avec un haut débit transactionnel.

En outre, cette nouvelle architecture permet, à ressources constantes (en nombre de processeurs), de faire varier totalement la limite puissance/fiabilité, en pouvant affecter d'une façon dynamique les processeurs, tantôt à la puissance, tantôt à la redondance en fonction des besoins de sécurité et des besoins de puissance. Cette fonctionnalité est très importante, car elle permet de simplifier certaines phases de calcul (mise à jour des index) dans les SGBD (Systèmes de Gestion de Base de Données), lorsque l'on sait par exemple que la nécessité du maintien de la cohérence en cas de reprise suite à une interruption est très lourde, et qu'il est préférable de jouer la redondance.

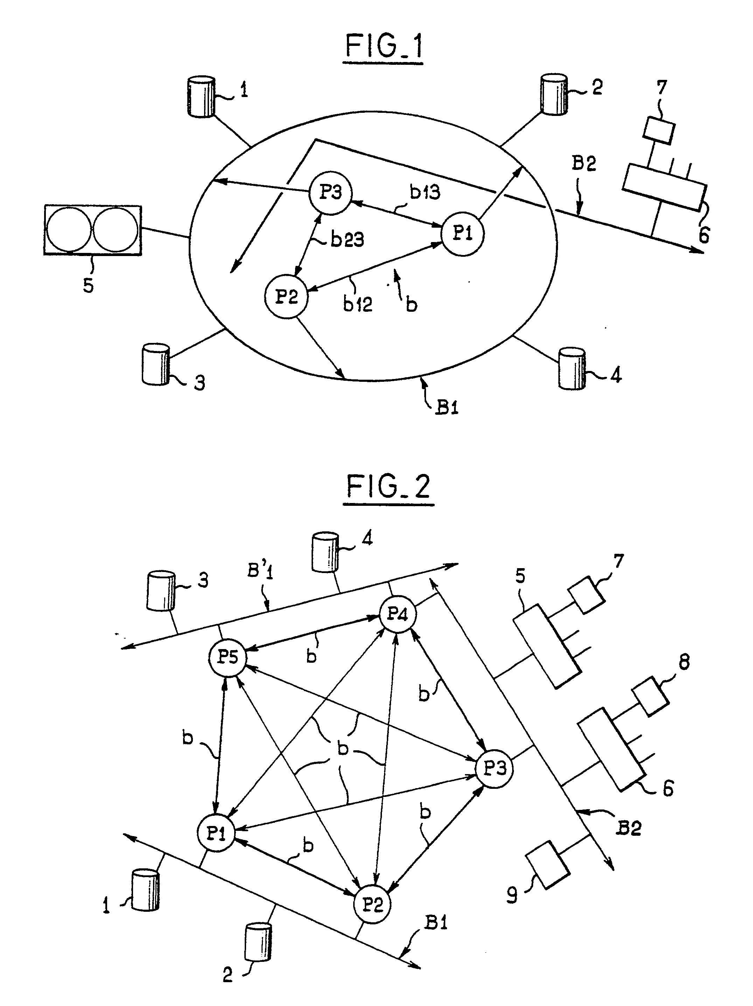

D'autres avantages, caractéristiques et détails de l'invention ressortiront de la description explicative qui va suivre faite en référence au dessin annexé donné à titre d'exemple qui illustre schématiquement sur les figures 1 et 2 deux modes de réalisation de l'invention.

En se reportant à la figure 1, le système informatique tel que schématiquement représenté comprend essentiellement une machine multiprocesseur à trois processeurs P1 à P3 dans l'exemple considéré ici, un ensemble d'organes périphériques 1 à 7 et des moyens de liaison B1, B2 qui relient les processeurs aux organes périphériques.

Dans l'exemple de la figure 1, les organes périphériques sont des unités de disques 1 à 4, un dérouleur de bande 5, un serveur 6 de terminaux et 7 l'un de ces terminaux tel un pupitre de commande ou une console par exemple. Les moyens de liaison comprennent un bus externe d'entrée-sortie normalisé B1 du type SCSI qui relie les organes périphériques 1 à 5 aux processeurs P1 à P3, et un bus externe d'entrée-sortie normalisé B2 du type ETHERNET qui relie le serveur 6 aux processeurs P1 à P3.

La machine multiprocesseur est du type symétrique, c'est-à-dire que les processeurs P1, P2, P3 sont identiques et fonctionnent chacun sous la même copie du système d'exploitation, et est du type à lien serré, c'est-à-dire qu'il s'instaure un nombre élevé de dialogues sous forme de requêtes entre les différents processeurs au cours de l'exécution d'un programme, un seul processeur pouvant ne pas réaliser à lui tout seul l'ensemble des opérations nécessaires, le système d'exploitation se chargeant de répartir ces opérations ou tâches entre les différents processeurs.

Selon une caractéristique essentielle de l'invention, l'architecture du système informatique est complétée par des canaux de communication b qui relient directement chaque processeur P1 à P3 à chacun des autres processeurs : canal b12 entre P1 et P2, canal b13 entre P1 et P3, et canal b23 entre P2 et P3.

Plus précisément, chaque processeur P1 à P3 est relié directement par un canal FIFO en point à point à duplex intégral à chacun des autres, assurant ainsi une totale orthogonalité. Autrement dit, chaque canal b communique avec un processeur par l'intermédiaire d'une mémoire tampon prévue pour chaque sens de transmission (canal vers processeur et vice-versa). Chaque mémoire tampon est constituée par une pile de registres adressés de manière à ce que la première information entrée dans la pile soit la première information sortie de cette pile. Le transfert des messages entre deux processeurs pourra donc s'effectuer de manière asynchrone, ce qui entraîne une efficacité accrue. En particulier, les requêtes adressées d'un processeur à l'autre aussi bien dans le cours normal du traitement d'une tâche ou dans le cas d'une reconfiguration du système, seront traitées sans retard. Plus précisément, ces requêtes étant courtes, les transferts physiques pourront s'initialiser dès le début de la constitution de la requête par le processeur émetteur, assurant ainsi un recouvrement maximum sans risque de perte d'information, grâce au fonctionnement asynchrone des canaux inter-processeurs.

Selon les applications envisagées, la transmission des messages sur les canaux b est assurée en série ou en parallèle.

Le système d'exploitation de la machine inclut un noyau temps réel adapté qui, grâce à l'architecture de la machine, peut reconfigurer l'ensemble des ressources et éventuellement éliminer les ressources défectueuses de manière à poursuivre le traitement sans interruption pour l'utilisateur, rendant ainsi la machine tolérante aux incidents de fonctionnement et notamment aux pannes.

Concrètement, lors de l'exécution d'une tâche demandée par un utilisateur, le système d'exploitation pilote les différents processeurs qui doivent intervenir pendant cette exécution, ce qui se traduit par la transmission de messages entre les processeurs par l'intermédiaire des canaux b, plusieurs processeurs pouvant dialoguer ensemble, sachant que simultanément le transfert de données par le bus B n'altèrera pas les communications inter-processeurs et vice-versa.

Périodiquement, les systèmes d'exploitation des processeurs suspendent l'exécution des tâches des programmes utilisateurs et se réunissent en assemblée afin de dialoguer entre eux par les canaux b pour décider par vote majoritaire d'éventuelles reconfigurations à effectuer pour la poursuite des tâches. Ainsi, lors d'une défaillance au cours du traitement d'une tâche, tant logicielle que matérielle, détectée et remontée au système d'exploitation du processeur affecté, avec le cas échéant lancement de programmes de tests et de diagnostics, les systèmes d'exploitation décident de la reconfiguration à effectuer pour reprendre le traitement de la tâche juste avant l'apparition de la défaillance, avec si nécessaire restauration des fichiers par exemple éventuellement pollués suite à la défaillance. Une telle reconfiguration nécessite donc l'envoi de messages entre tous les processeurs qui transitent par les canaux b dédiés au dialogue inter-processeurs. Ainsi, quel que soit l'état des bus externes B1 et B2, ces messages peuvent être immédiatement pris en compte sans pénaliser l'utilisateur. A la limite, si (n-1) processeurs sont défaillants, le dernier se verra confier l'exécution des programmes dans sa totalité.

Concrètement, les processeurs P1, P2 et P3 peuvent être des micro-ordinateurs monocartes possédant une unité centrale tel le circuit intégré 486 D'INTEL, avec mémoire et des entrées-sorties privées. Les canaux de communication inter-processeurs peuvent être des liaisons à huit bits parallèles ou des liaisons série optiques de 100 Mbits/s, le débit étant de l'ordre de 10 à 30 M octets/s pour chaque sens de transfert.

Dans le cas de la figure 2, le système informatique comprend une machine multiprocesseur avec cinq processeurs P1 à P5 reliés entre eux par dix canaux b selon le même principe que celui de la figure 1 où chaque processeur est relié à chacun des autres processeurs, un ensemble d'organes périphériques 1 à 8 et des moyens de liaison B1, B'1 et B2 qui relient les processeurs aux organes périphériques.

Dans cet exemple, les organes périphériques sont des unités de disques 1 à 4, deux serveurs 5 et 6 de terminaux dont le terminal 7 pour le serveur 5 et le terminal 8 pour le serveur 6, et un terminal 9 du type X11 par exemple. Les moyens de liaison comprennent un bus externe d'entrée-sortie B1 du type SCSI qui relie les processeurs P1 et P2 aux unités de disques 1 et 2, un bus externe d'entrée-sortie B'1 également du type SCSI qui relie les processeurs P4 et P5 aux unités de disques 3 et 4, et un bus externe d'entrée-sortie B2 du type ETHERNET qui relie les serveurs 5, 6 et le terminal 9 du type X11 par exemple aux processeurs P3 et P4.

Tout ce qui a été dit au sujet des possibilités du sytème informatique décrit à la figure 1, s'applique également au système informatique représenté à la figure 2.

Bien entendu, l'invention ne se limite pas à ces deux exemples de réalisation. En particulier, tout l'environnement extérieur associé aux processeurs P1 à P3 (figure 1) et P1 à P5 (figure 2), d'une manière plus générale P1 à Pn, peut varier d'un système informatique à l'autre sans sortir du cadre de l'invention dès l'instant où l'on retrouve une caractéristique essentielle de celle-ci, à savoir un canal qui relie chacun des processeurs aux autres processeurs.

**Revendications**

1.- Machine multiprocesseur symétrique à niveau de lien serré, du type comprenant au moins deux processeurs, des organes périphériques et des moyens de liaison qui relient les processeurs aux organes périphériques pour le transfert de données lors des opérations d'entrée-sortie classiques, caractérisée en ce que chaque processeur (P1,P2,...Pn) est directement relié à chacun des autres processeurs au moyen d'un canal (b) dédié uniquement à la fonction communication inter-processeurs.

2.- Machine selon la revendication 1, caractérisée en ce que chaque canal (b) est constitué par un canal du type "FIFO" ou "premier entré - premier sorti", qui comprend à chaque extrémité et pour chaque sens de transmission un tampon de mémorisation permettant à chaque canal (b) de travailler de manière asynchrone avec transmission des données en série ou en parallèle.

3.- Machine selon la revendication 1 ou 2, caractérisée en ce que la machine fonctionne sous un noyau temps réel qui, grâce à cette architecture, peut reconfigurer l'ensemble des ressources défectueuses de manière à poursuivre le traitement sans interruption pour l'utilisateur rendant la machine tolérante aux incidents de fonctionnement et notamment aux pannes.

4.- Machine selon la revendication 3, caractérisée en ce que les processeurs (P1, P2,... Pn) dialoguent périodiquement entre eux et décident de la reconfiguration éventuelle à effectuer, en particulier en cas de panne.

## FIG_1

## FIG_2

EP 0 454 526 A1

Office européen
des brevets

# RAPPORT DE RECHERCHE EUROPEENNE

Numero de la demande

EP    91 40 0949

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-19757 (SIEMENS)<br>* page 1, ligne 4 - page 3, ligne 20 *<br>* page 10, ligne 6 - page 11, ligne 11 *<br>* abrégé; revendications 1-3; figure 5 *<br>--- | 1-4 | G06F15/16<br>G06F13/38 |
| X | DATA COMMUNICATIONS.<br>vol. 10, no. 12, décembre 1981, NEW YORK US<br>pages 88 - 96; R. Coyne:<br>"Dynamic reconfiguration by a local network's operating system"<br>* le document en entier *<br>--- | 1-4 | |
| X | EP-A-111399 (INMOS)<br>* pages 1 - 5, ligne 28 *<br>* page 7, ligne 20 - page 8, ligne 17 *<br>* page 9, ligne 8 - page 13, ligne 15 *<br>* pages 66 - 72, ligne 12 *<br>* abrégé; figures 1-4, 11 * | 1-2 | |
| A | --- | 3-4 | |
| A | 7th International conference on distributed computing systems<br>21 septembre 1987, Berlin, West Germany,<br>pages 382 - 389; T. Hoshiko:<br>"A 100Mb/s optical token-ring network suitable for high-speed inter-processor communications"<br>* le document en entier *<br>--- | 1-4 | DOMAINES TECHNIQUES RECHERCHES (Int. Cl.5)<br><br>G06F |
| A | PATENT ABSTRACTS OF JAPAN<br>vol. 10, no. 353 (M-539)(2409) 28 novembre 1986,<br>& JP-A-61 153753<br>* le document en entier *<br>--- | 1-2 | |
| A | IEEE MICRO.<br>vol. 5, no. 1, février 1985, NEW YORK US<br>pages 53 - 66; H. Kirrmann:<br>"Events and interrupts in tightly coupled multiprocessors"<br>* le document en entier *<br>--- | 1 | |

Le présent rapport a été établi pour toutes les revendications

| Lieu de la recherche | Date d'achèvement de la recherche | Examinateur |
|---|---|---|
| LA HAYE | 24 JUILLET 1991 | SOLER J.M.B. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................
& : membre de la même famille, document correspondant

EPO FORM 1503 03.82 (P0402)

7